(19) Europäisches Patentamt
European Patent Office
Office européen des brevets

(11) Veröffentlichungsnummer: **0 252 359 B1**

# (12) EUROPÄISCHE PATENTSCHRIFT

(45) Veröffentlichungstag der Patentschrift: **29.07.92**

(51) Int. Cl.5: **C09K 19/38**, C08G 18/76, C08G 18/58, C08G 59/20, C08G 59/40, C08G 59/50, C08G 63/52, C08G 63/66, C08G 63/68, C08G 8/00, C08G 12/32

(21) Anmeldenummer: **87108935.5**

(22) Anmeldetag: **23.06.87**

Die Akte enthält technische Angaben, die nach dem Eingang der Anmeldung eingereicht wurden und die nicht in dieser Patentschrift enthalten sind.

## (54) Verfahren zur Herstellung von polymeren Netzwerken mit Überstrukturen, entsprechende polymere Netzwerke und ihre Verwendung.

(30) Priorität: **05.07.86 DE 3622613**

(43) Veröffentlichungstag der Anmeldung:
**13.01.88 Patentblatt 88/02**

(45) Bekanntmachung des Hinweises auf die Patenterteilung:
**29.07.92 Patentblatt 92/31**

(84) Benannte Vertragsstaaten:
**AT DE FR GB IT**

(56) Entgegenhaltungen:
**EP-A- 0 165 399**
**US-A- 3 014 894**
**US-A- 3 180 883**
**US-A- 4 412 059**

(73) Patentinhaber: **BAYER AG**

**W-5090 Leverkusen 1 Bayerwerk(DE)**

(72) Erfinder: **Dhein, Rolf, Dr.**
**Deswatinesstrasse 30**
**W-4150 Krefeld 1(DE)**
Erfinder: **Müller, Hanns-Peter, Dr.**
**Im Kerberich 6**
**W-5068 Odenthal(DE)**
Erfinder: **Meier, Helmut-Martin, Dr.**
**Am Obersthof 3**
**W-4030 Ratingen 6(DE)**
Erfinder: **Gipp, Roland, Dr.**
**Jakob-Böhme-Strasse 2**
**W-5000 Koeln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

CHEMICAL ABSTRACTS Band 101, Nr. 12, 17. September 1984, Seite 5, Spalte 2, Zusammenfassung Nr. 91537y, Columbus Ohio, USA: Fixation of the structure of a liquid crystalline monomer of the azomethine series by means of its polymerization in the mesophase" & Vysokomol. Soedin Ser. B 1984, Band 26, Nr. 3, Seiten 208-210

idem

POLYMER SCIENCE U. S. S. R. Band 26, Nr. 12, 1984, Seiten 2882-2890, Oxford, GB: "Synthesis of high-molocular weight liquid crystal polyesters based on a polycondendation mesogenic monomer"

## Beschreibung

Es wird ein Verfahren zur Herstellung von polymeren Netzwerken mit Überstrukturen, resultierend aus der Verwendung von flüssig-kristallinen, (mehr)funktionellen Bausteinen beschrieben, dadurch gekennzeichnet, daß man innerhalb des flüssig-kristallinen, vorzugsweise nematischen Temperaturbereichs der zum Aufbau der Netzwerke verwendeten, (mehr)funktionellen Bausteine mit flüssigkristallinem Charakter den Aufbau zu Polymeren nach Polymerisations-, Polyadditions- oder Polykondensationsverfahren vornimmt.

Es werden auch nach diesem Verfahren zugängliche polymere Netzwerke sowie ihre Verwendung beansprucht.

Flüssig-kristalline (LC)-Polymere sind in jüngster Zeit von vielen Autoren beschrieben worden. Eine Zusammenfassung über die Theorie, Synthese, Charakterisierung, Struktur-Eigenschafts-Beziehung und Anwendungen von LC-Polymeren enthält die Monographie von L. LAWRENCE CHAPOY, Recent advances in liquid crystalline polymers, Elsevier Applied Science Publishers LTD (1985), London, New York.

Sämtliche dort beschriebenen LC-Polymere weisen ein gemeinsames Strukturmerkmal auf: sie sind linear gebaut und enthalten flüssigkristalline Polymer-Bausteine in der Haupt- und Seitenkette. Die beschriebenen LC-Polymere zeigen lyotropes oder thermotropes Verhaltens Typisch für diese linearen LC-Polymeren sind ihre mechanischen Eigenschaften, die deutlich richtungsabhängig sind.

Neue Forschungsergebnisse machen deutlich, daß im Falle von Kettenmolekülen, bei denen mindestens einige Einheiten in konformativer Unordnung vorliegen, die Bildung einer nematischen Phase von einer signifikanten Änderung der Konformation begleitet wird. Diese Änderung trägt zu größerer Stabilität der nematischen Phase bei und kann sich wiederspiegeln in den höheren Übergangstemperaturen (vgl. FLORY, in L.L. CHAPOY, Seite 101).

Bei den flüssig-kristallinen Verbindungen unterscheidet man mindestens drei charakteristische Phasen, die unter dem Polarisationsmikroskop beobachtet werden, die smektische Phase, die nematische Phase und die cholesterische Phase (R. Steinsträßer, L. Pohl, Angew.-Chem. 85 (1973), 706). Eine Auflistung der bisher synthetisierten flüsigen Kristalle enthält z.B. das Buch von D. Demus und H. Zaschke "Flüssige Kristalle in Tabellen II", VEB, Deutscher Verlag für Grundstoffindustrie, Leipzig, 1984.

Polymere Netzwerke mit besonderen Überstrukturen sind bisher nicht bekannt geworden.

Aufgabe der vorliegenden Erfindung ist es daher, polymere Netzwerke zur Verfügung zu stellen, die eine höhere Ordnung aufweisen und durch besondere Überstrukturen verbesserte Eigenschaften in den Endprodukten besitzen und zu größerer Stabilität der ausgebildeten Netzwerke, ohne daß eine ausgeprägte Richtungsabhängigkeit der Eigenschaften vorliegt, beitragen.

Diese Aufgabe konnte durch das im folgenden näher beschriebene erfindungsgemäße Aufbauprinzip der dreidimensionalen Polymeren mit besonderen Überstrukturen und das zu ihrer Herstellung geeignete erfindungsgemäße Verfahren gelöst werden.

Es wurde nämlich überraschenderweise gefunden, daß sich polymere Netzwerke mit besonderen Überstrukturen oder mit höherer Ordnung technisch durchaus herstellen lassen, wenn man den Polymeraufbau durch Polyaddition oder Polymerisation oder Polykondensation erfindungsgemäß im flüssig-kristallinen Temperaturbereich, bevorzugt im nematischen Bereich der zum Aufbau verwendeten mehrfunktionellen besonderen Bausteine vornimmt. Die besonderen Bausteine sind vernetzungsfähige, funktionelle Gruppen tragende flüssig-kristalline Bausteine für Polymere.

Dieser Befund ist deswegen so überraschend und war für den Fachmann nicht vorhersehbar, da die zum Aufbau der polymeren Netzwerke mit Überstrukturen verwendeten flüssig-kristallinen Bausteine durch die Vernetzungsreaktion chemisch verändert werden und durch diese chemische Veränderung beim Netzwerkaufbau eine signifikante Änderung der nematischen Phasen erwartet werden mußte.

Dies ist überraschenderweise nicht der Fall. Das neue Prinzip erlaubt den Aufbau von polymeren Netzwerken mit Überstrukturen durch Polyaddition oder Polymerisation oder Polykondensation, in dem man die zum Netzwerkaufbau verwendeten, (mehr)funktionellen Bausteine mit flüssigkristallinem Charakter im flüssig-kristallinen Temperaturbereich, bevorzugt im nematischen Bereich, gegebenenfalls mit (mehr)-funktionellen Bausteinen mit ebenfalls flüssig-kristallinem Charakter oder auch mit (mehr)funktionellen Bausteinen ohne flüssig-kristallinen Charakter, zur Reaktion bringt. Schließlich ist es auch möglich, polymere Netzwerke mit Überstrukturen zu erhalten, wenn man mehrfunktionelle Bausteine als LC-Vorstufen einsetzt, wobei das polymere Netzwerk mit LC-Charakter erst durch den Netzwerkaufbau entsteht. Sämtliche genannten Aufbaureaktionen führen zu Polymeren mit verbesserten Eigenschaften.

Gegenstand der vorliegenden Erfindung sind demnach polymere Netzwerke mit Überstrukturen, dadurch gekennzeichnet, daß man nach den Verfahren der Polyaddition, Polykondensation oder Polymerisation

a) funktionelle Bausteine mit flüssig-kristallinem Charakter, vorzugsweise mehrfunktionelle Bausteine,

gegebenenfalls mit

b) funktionellen, vorzugsweise mehrfunktionellen Bausteinen, mit oder ohne flüssig-kristallinem Charakter innerhalb des flüssig-kristallinen, bevorzugt innerhalb des nematischen Temperaturbereichs der zum Aufbau der polymeren Netzwerke verwendeten (mehr)funktionellen Bausteine mit flüssig-kristallinen Charakter unter Aufbau zum Polymeren umsetzt und gegebenenfalls bei Temperaturen außerhalb des flüssig-kristallinen Bereichs nachhärtet.

Gegenstand der vorliegenden Erfindung sind insbesondere polymere Netzwerke mit Überstrukturen, dadurch gekennzeichnet, daß es sich um Polyadditionskunststoffe nach dem Diisocyanat-Polyadditionsverfahren handelt; sowie entsprechende Verfahren zu ihrer Herstellung.

Gegenstand der Erfindung sind insbesondere auch polymere Netzwerke mit Überstrukturen, dadurch gekennzeichnet, daß es sich um Polyadditionskunststoffe vom Epoxidharztyp handelt; sowie entsprechende Verfahren zu ihrer Herstellung.

Gegenstand der Erfindung sind insbesondere auch polymere Netzwerke mit Überstrukturen, dadurch gekennzeichnet, daß es sich um Polymerisationskunststoffe vom Typ der ungesättigten Polyesterharze handelt; sowie entsprechende Verfahren zu ihrer Herstellung.

Gegenstand der Erfindung sind ferner polymere Netzwerke mit Überstrukturen, dadurch gekennzeichnet, daß es sich um Polykondensationskunststoffe vom Typ der Melaminharze oder Phenonharze handelt, sowie entsprechende Verfahren zu ihrer Herstellung.

Gegenstand der Erfindung ist schließlich die Verwendung der durch Polyadditions-, Polymerisations- oder Polykondensationsreaktionen erhaltenen Polymeren mit Überstrukturen als polymere Werkstoffe mit verbesserten Eigenschaften und als Beschichtungs- und Überzugsmittel.

Zur Herstellung der polymeren Netzwerke mit Überstrukturen nach den erfindungsgemäßen Verfahren kommen als Ausgangsprodukte funktionelle Bausteine a) und/oder b) infrage, welche für den Aufbau von Polymeren mit einem räumlichen Netzwerk geeignet sind. Es sind dies z.B. mindestens zwei funktionelle Gruppen wie OH-, $NH_2$-, COOH- oder NCO-Gruppen tragende Verbindungen, welche in Additions- oder Kondensationsreaktionen ein Kettenwachstum ermöglichen.

Bei Polymersationsreaktionen mit polymerisierbaren Gruppen, z.B. ethylenisch ungesättigten Gruppen oder Epoxidgruppen, kann ein Kettenwachstum auch bereits mit einer Doppelbindung oder Epoxidgruppe erzielt werden.

Es müssen jedoch immer solche Verbindungen als funktionelle Bausteine verwendet oder mitverwendet werden, welche eine räumliche Vernetzung (mehr als difunktionelle, nur kettenbildende Reaktionen) ergeben. Dies sind bei den üblichen Polyadditions- oder Polykondensationsreaktionen z.B. tri- oder mehrfunktionelle Bausteine.

Bei geeigneten Polymerisation-Additions-Reaktionen können jedoch auch Vernetzungsbrücken aus nur zwei reaktiven Gruppen, z.B. durch Reaktion einer Carbodiimidgruppe und einer Carboxylgruppe, entstehen, oder difunktionelle Verbindungen zu räumlich vernetzten Polymeren führen, z.B. Diisocyanate durch Trimerisierungsreaktionen.

Verbindungen mit z.B. zwei ethylenisch ungesättigten Gruppen oder zwei Epoxidgruppen führen zu Verzweigungen und räumlich vernetzten Polymerisationen bei Polymerisationsreaktionen.

Polymere Netzwerke können aus den funktionellen Bausteinen auch durch Vernetzung von linear Polymeren erreicht werden, z.B. durch Diisocyanate oder Peroxide (unter Beachtung der erfindungsgemäß einzuhaltenden Temperaturbereich der flüssig-kristallinen Bausteine).

Bevorzugt sind jedoch der Aufbau über funktionelle Bausteine, insbesondere des Typs a) + b). In bestimmten Fällen können jedoch auch polymere Netzwerke aus nur einem flüssig-kristallinen Baustein a) erfolgen, z.B. aus mehreren ungesättigter Doppelbindungen enthaltenden UP-Harzen, die bei der Polymerisationsreaktion in räumliche Polymernetzwerke überzugehen vermögen.

Neben den flüssig-kristallinen Bausteinen a) können auch nicht-flüssig-kristalline Bausteine üblichen Aufbaus b) verwendet werden. In den meisten Fällen ist dies sogar bevorzugt vor der Verwendung von flüssig-kristallinen Bausteinen sowohl in a) wie auch in b).

Als funktionelle Bausteine ohne flüssig-kristallinen Charakter können im Prinzip alle (mehr)funktionellen Ausgangsstoffe, wie sie für übliche Polyadditionsreaktionen, Polykondensationsreaktionen oder Polymerisationsreaktionen bekannt sind, eingesetzt werden. Es handelt sich z.B. um die üblichen Monomeren mit ungesättigten Doppelbindungen oder zwei- oder mehrfunktionelle Di-/Polyole, Di-/Polyamine, Di-/Polycarbonsäuren, Aminocarbonsäuren, Di-/Polyisocyanate und viele andere, an sich bekannte Ausgangsstoffe mit funktionellen Gruppen. Eine Reihe solcher Bausteine b) werden noch bei der näheren Kennzeichnung der polymeren Netzwerk-bildenden Reaktionen beispielsweise aufgeführt.

Die genannten, flüssig-kristallinen Ausgangsverbindungen können als solche oder als bereits in oligomerer oder niederpolymerer, unvernetzter Form (z.B. in Vorkondensaten) eingesetzt werden.

Zur Herstellung der polymeren Netzwerke mit Überstrukturen nach den erfindungsgemäßen Verfahren kommen als flüssig-kristalline Ausgangsprodukte a), gegebenenfalls auch b), Verbindungen infrage, die der allgemeinen Formel (I)

$R_1$-$(A_1)_m$-$Z_1$-$A_2$-$Z_2$-$(A_3)_n$-$R_2$ (I)

entsprechen,
wobei

$R_1$, $R_2$

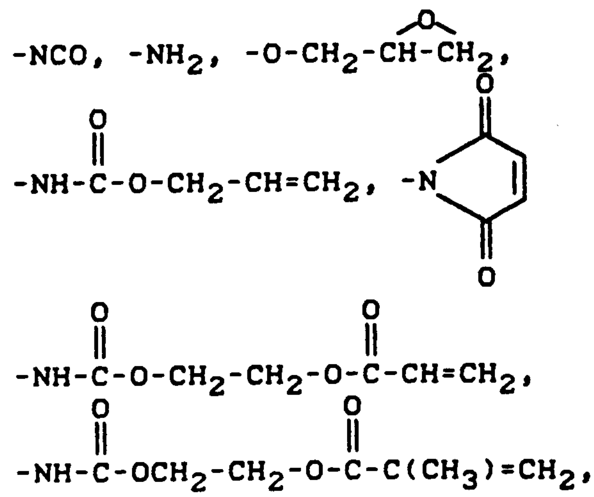

-L-$(CH_2)_x$OH, -L-$(CH_2)_x$-$CO_2$H,
L = O, S, direkte Bindung, -$(CH_2)_x$-OH, -$(CH_2)_x$-$CO_2$H
$x \geq 1$

$A_1$, $A_2$, $A_3$ 1,4-Phenylen-, 4,4'-Diphenyl-, 4,4'-(1,2,3,-4,5,6-Hexahydro)diphenyl-, 1,4-Cyclohexylen-, 1,3-Dioxan-2,5-diyl-, Piperidin-1,4-diyl-, Piperazin-1,4-diyl-, 1,4-Bicyclo-(2,2,2)-octylen- oder Pyrimidin-2,5-diyl-, 2,7-oder 2,6-Naphthylen-Gruppen, wobei $A_1$ - $A_3$ durch 1, 2, 3 oder 4 F-Atome oder niedere Alkylgruppen, vorzugsweise Methyl, oder 1 oder 2 Substituenten aus der Reihe Cl, Br, -CN, -$CF_3$ substituiert sein können;

$Z_1$, $Z_2$ -CO-O-, -O-CO-, -HC=CH-, -N=N-, -CH=N-, - $CH_2CH_2$-, -$OCH_2$-, -$CH_2O$-, -$CH_2S$-, -$SCH_2$-, -O-CO-O-, -O-CO-NH-, -NH-CO-O-, -$CH_2$-O-CO-NH-, -NH-CO-O-$CH_2$-, -NH-CO-S-$CH_2$-, -$CH_2$-S-CO-NH-, -$CH_2$-O-CO-, -NH-CO-S-, -S-CO-NH-, -CO-S-, -CO-$SCH_2$-, $CH_2$-S-CO-,-S-CO-, -CO-O-$CH_2$-oder eine direkte Bindung, wobei eine der Gruppen $Z_1$, $Z_2$ entfallen kann,

n 0 oder 1
und

m 1 oder 2 bezeichnen, wobei für den Fall, daß m = 2 ist die beiden Gruppen $A_1$ gleich oder verschieden sein können.

Als flüssig-kristalline Verbindungen kommen weiter beispielsweise infrage

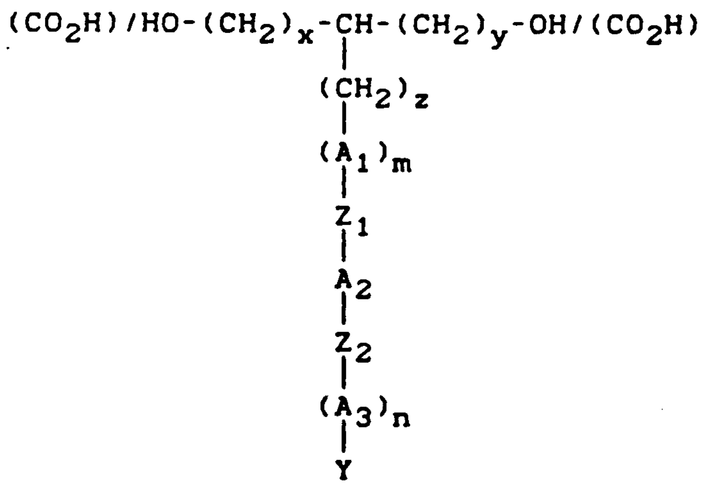

(IA)

wobei

x, y, z ≧1,

und wobei

$A_1$, $A_2$, $A_3$, $Z_1$, $Z_2$, m und n die oben angegebenen Bedeutungen entspricht und Y = H oder $R_1$ bedeutet.

Zur Herstellung der polymeren Netzwerke mit Überstrukturen kann das Diisocyanat-Polyadditionsverfahren im breiten Sinn verwendet werden. Bevorzugte flüssigkristalline (LC)-Bausteine sind Polyisocyanate der Formel (II)

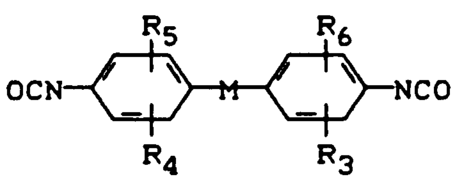

(II)

wobei

M -HC=CH-, -N=N-, -CH=N-, -COO-, $-CH_2-CH_2-$ und

$R_3$ bis $R_6$ Wasserstoff oder gesättigte aliphatische, gegebenenfalls durch Ethersauerstoffatome unterbrochene Substituenten mit 1 bis 12 C-Atomen oder F, Cl, Br, -CN, $-CF_3$

darstellen; ganz besonders bevorzugt ist das technisch gut zugängliche Diisocyanat (III), dessen flüssigkristalliner Charakter erst jetzt entdeckt wurde.

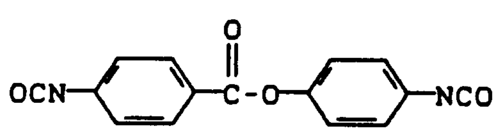

(III)

Diisocyanate vom Typ der aromatischen Ester (III) sind aus DE-B 1 085 869 lange bekannt.

Es wurde nun gefunden, daß die in DE-B 1 085 869 beschriebenen Diisocyanate eine ausgeprägte nematische Phase aufweisen. Eine quantitative Differntial-Thermoanalyse-(DTA)-Messung an der Verbindung (III) zeigte beim Aufheizen unter Schmelzen einen Übergang bei 117,2° C fest → nematisch und bei 172,6° C einen Übergang nematisch → isotrop flüssig. Beim Abkühlen der Schmelze erfolgt bei 172° C der Übegang isotrop flüssig → nematisch und bei 102° C der Übergang nematisch → fest.

Auch die quantitative polarisationsmikroskopische Messung zeigt diese Phasenübergänge.

Aufheizen:

117,5° C Übergang fest → nematisch

172,1 ° C Übergang nematisch → isotrop flüssig

Abkühlen:

172,5 ° C Übergang isotrop flüssig → nematisch
101,1 ° C Übergang nematisch → fest

Zur Herstellung der polymeren Netzwerke mit Überstrukturen kommen jedoch auch Abmischungen der flüssigkristallinen Diisocyanate gemäß Formeln (I), speziell (II) und insbesondere (III), mit konventionellen, aliphatischen, cycloaliphatischen, araliphatischen und aromatischen bzw. heterocyclischen Polyisocyanaten, bzw. deren beliebigen Mischungen infrage, z.B. Di- und/oder Polyisocyanate, wie sie von W. Siefken in Justus Liebigs Annalen der Chemie, 562, Seiten 75-136 beschrieben werden, bzw. solche Polyisocyanate wie sie in der DE-A 2 832 253 ausführlich beschrieben sind. Besonders bevorzugt werden die technisch leicht zugänglichen Polyisocyanate, z.B. das 2,4- und/oder 2,6-Toluylendiisocyanat, sowie beliebige Gemische dieser Isomeren (TDI), Diphenylmethandiisocyanat-4,4'- und/oder 2,4'-und/oder 2,2'-Isomere, Polyphenyl-polymethylen-polyisocyanate, wie sie durch Anilin-Formaldehydkondensation und anschließende Phosgenierung hergestellt werden ("rohes MDI") und "modifizierte Polyisocyanate", wie z.B. Carbodiimidgruppen, Urethangruppen, Allophanatgruppen, Isocyanuratgruppen, Harnstoffgruppen und/oder Biuretgruppen aufweisen, insbesondere solche modifizierten Polyisocyanate die sich vom 2,4- und/oder 2,6-Toluylendiisocyanat bzw. vom 4,4'- und/oder 2,4'-Diphenylmethandiisocyanat ableiten. Auch aliphatische Diisocyanate sind geeignet, z.B. Hexamethylendiisocyanat, Dicyclohexylmethan-4,4'-diisocyanat,Cyclohexan-1,4-diisocyanat oder biuretisierte Polyisocyanate, abgeleitet von obigen Diisocyanaten oder von Isophorondiisocyanat, sowie Trimerisate der genannten Diisocyanate.

Als Ausgangskomponenten kommen ferner Verbindungen mit mindestestens zwei gegenüber Isocyanaten reaktionsfähigen Wasserstoffatomen von einem Molekulargewicht von 400 bis 10.000 infrage. Hierunter versteht man neben Amino, Thiol- und/oder Carboxylgruppen aufweisenden Verbindungen, vorzugsweise Hydroxylgruppen, insbesondere 2 bis 8 Hydroxylgruppen aufweisende Verbindungen, speziell solche vom Molekulargewicht von 800 bis 6.000, vorzugsweise aber 2 bis 4 Hydroxylgruppen aufweisende Polyester, Polyether, Polythioether, Polyacetale, Polycarbonate und Polyesteramide, wie sie für die Herstellung von homogenen oder zellförmigen Polyurethanen an sich bekannt sind und wie sie z.B. in der DE-A 2 832 253, Seiten 11-18 beschrieben werden. Besonders bevorzugt sind Polyether, die durch Addition von einem oder mehreren Alkylenoxiden (Ethylenoxid und besonders Propylenoxid) und zwei- oder mehrwertige "Starter" (z.B. Propylenglykol, Glycerin, Sorbit, Formose, Triethanol amin, Trimethylolpropan oder andere erhalten werden, sowie Polyether, welche Polyadditionsprodukte aus Diisocyanaten aus Hydrazin und/oder Diaminen und/oder Glykolen oder Polymerisate und/oder Pfropfpolymerisate, vorzugsweise aus Styrol und Acrylnitril, dispergiert oder gelöst enthalten. Weiter geeignet sind Polyester, einschließlich Polycarbonaten, wie sie üblicherweise als Weichsegment verwendet werden. Die bevorzugten höhermolekularen Verbindungen dieser Art haben Schmelzpunkte in der Regel unterhalb von 60, vorzugsweise unterhalb von 45 ° C. Bevorzugt werden Hydroxylgruppen aufweisende höhermolekulare Verbindungen mit einer Funktionalität, zumindest anteilweise, verwendet, welche Funktionalitäten oberhalb von 2 besitzen, wenn bei der Polyadditionsreaktion nicht weitere, mehr als zwei-funktionelle Ausgangsbausteine verwendet werden oder wenn die Reaktion unter Vernetzungsbedingungen geführt wird.

Gegebenenfalls können als Ausgangskomponenten Verbindungen mit mindestens zwei gegenüber Isocyanaten reaktionsfähigen Wasserstoffatomen und einem Molekulargewicht von 32 bis 399 verwendet werden. Auch in diesem Fall versteht man hierunter Hydroxylgruppen und/oder Aminogruppen und/oder Thiolgruppen und/oder Carboxylgruppen und/oder Hydrazidgruppen aufweisende Verbindungen die als Kettenverlängerungsmittel oder Vernetzungsmittel dienen, Diese Verbindungen weisen in der Regel 2 bis 8, vorzugsweise 2 bis 4, gegenüber Isocyanaten reaktionsfähige Wasserstoffatome auf. Beispiele werden hierfür in der DE-A 2 832 253 (Seiten 19-20) beschrieben, Beispielsweise genannt seien Wasser, Ethylenglykol, Butandiol-1,4, 2,2-Dimethylpropandiol, Trimethylolpropan, Formitgemische, Hydrazin, Ethylendiamin, 3,3'-Dimethyl-4,4'-diaminodicyclohexylmethan, 3,5-Diethyl-2,4- (und/oder 2,6)-diaminotoluol oder Adipinsäuredihydrazid.

Bei den Reaktionen können Hilfs- und Zusatzmittel üblicher Art, z.B. Wasser, Katalysatoren, oberflächenaktive Zusatzstoffe, Reaktionsverzögerer, Weichmacher oder fungistatisch oder bakteriostatisch wirkende Substanzen, Stabilisatoren und Lichtschutzmittel, wie Füllstoffe wie Bariumsulfat, Kieselgur, Ruß, Schlämmkreide, Glasfasern, Kohlenstoffasern, Aramidfasern verwendet werden,

Die Reaktionskomponenten werden nach den an sich bekannten Ein- oder Mehrstufenverfahren zur Umsetzung gebracht, wobei man sich oft maschineller Einrichtungen bedient, Einzelheiten über Verarbeitungseinrichtungen, die auch erfindungsgemäß infrage kommen, werden im Kunststoffhandbuch, Band VII,

herausgegeben von Vieweg und Höchtlen, Carl-Hanser-Verlag, München, 1966, beschrieben, Wichtig ist die jeweilige Reaktionstemperatur der erfindungsgemäßen Gemische im flüssig-kristallinen Temperaturbereich einer der Reaktionskomponenten, die entsprechend z.B. im besonders bevorzugten Fall bei der (Mit)-Verwendung des Diisocyanats (III) im Temperaturbereich von 117-170° C liegt. Die Aushärtezeiten (Reaktionszeiten zur Bildung der Polymernetzwerks) liegen je nach Wahl der Ausgangskomponenten und der verwendeten Katalysatoren und maschinellen Mischvorrichtungen zwischen 1 Minute und 24 Stunden,

Zur Herstellung von polymeren Netzwerken mit Überstrukturen vom Epoxidharztyp kommen folgende Verbindungen als flüssig-kristalline Ausgangsmaterialien a) infrage:

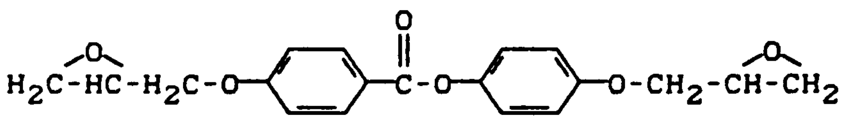 (IV)

Die Verbindung (IV) ist neu, Das Herstellungsverfahren wird in der gleichzeitig eingereichten deutschen Patentanmeldung P....... (Le A 24 641) beschrieben.

Verbindung (IV) besitzt flüssig-kristallinen Charakter (bestimmt durch quantitative DTA-Messung). Beim Aufheizen der Verbindung (IV) erfolgt bei 118° C Schmelzen, Übergang fest → isotrop flüssig. Beim Abkühlen erfolgt bei 93° C ein Phasenübergang flüssig → nematisch und bei 80° C ein Übergang nematisch → fest.

Wärmehärtbare Epoxidharzmischungen bestehen z.B. aus mindestens einem 1,2-Polyepoxid mit mehr als einer 1,2-Epoxidgruppe pro Molekül, mindestens einem cyclischen Carbonsäureanhydrid, oder einem Di- oder Polyamin, Härtungskatalysatoren sowie gegebenenfalls weiteren Hilfs- und Zusatzstoffen.

Zur Herstellung der polymeren Netzwerke mit Überstrukturen kommen jedoch auch Abmischungen der flüssig-kristallinen Polyepoxide gemäß Formel (I) mit konventionellen Polyepoxiden bzw. deren beliebige Mischungen infrage z.B. als 1,2-Polyepoxide aliphatische, cycloaliphatische, aromatische oder heterocyclische Verbindungen, die im Durchschnitt mehr als eine 1,2-Epoxidgruppe pro Molekül enthalten.

Verwendbare 1,2-Polyepoxidverbindungen können Polyglycidylether mehrwertiger Phenole sein, beispielsweise aus Brenzkatechin, Resorcin, Hydrochinon, aus 4,4'-Dihydroxydiphenylmethan, aus 4,4'-Dihydroxy-3,3'-dimethyldiphenylmethan, aus 4,4'-Dihydroxydiphenyldimethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, aus Novolacken (d.h. aus Umsetzungsprodukten von ein- oder mehrwertigen Phenolen mit Aldehyde, insbesondere Formaldehyd, in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkylethers erhalten wurden (GB-A 1 017 612), aus Polyphenolen, die durch Kondensation von Phenolen und langkettigen, mindestens zwei Halogenatome enthaltenden Halogenparaffinen erhalten wurden (vgl. GB-A 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N-Diepoxypropyl-4-aminophenylglycidether (vgl. GB-A 772 830 und GB-A 816 923).

Außerdem kommen infrage: Glycidylester mehrwertiger aromatischer, aliphatischer und cycloaliphatischer Carbonsäuren, beispielsweise Phthalsäurediglycidylester, Adipinsäurediglycidylester und Glydidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise aus 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend

durch Epoxidierung mit Perverbindung in Polyepoxide überführt werden oder aus Verbindungen, die zwei Cyclopenten- oder Cyclohexenringe über Brückenatome oder Brückenatomgruppen verknüpft enthalten. Außerdem seien Polymerisate von ungesättigten Monoepoxiden genannt, beispielsweise von Methacrylsäureglycidylester oder Allylglycidylether.

Vorzugsweise werden für das erfindungsgemäße Verfahren folgende Polyepoxidverbindungen oder deren Mischungen mitverwendet:
Polyglycidylether mehrwertiger Phenole, insbesondere aus Bisphenol A; Polyepoxidverbindungen auf der Basis von aromatischen Aminen, insbesondere Bis(N-epoxypropyl)-anilin, N,N'-Dimethyl-N,N'-diepoxypropyl-4,4'-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexyhydrophthalsäureanhydrid und 1 Mol eines Polyols mit n Hydroxylgruppen (n = ganze Zahl von 2 bis 6), insbesondere von 3 Mol Hexadrophthalsäurenahydrid und einem Mol 1,1,1-Trimethylolpropan, 3,4-Epoxycyclohexylmethyl-3,4-epoxycyclohexan-carboxylat.

Vorzugsweise können flüssige Polyepoxide, wie Bis(N-epoxypropyl)anilin oder Vinylcyclohexendiepoxid verwendet werden. Dies kann in besonderen Fällen die Viskosität von bereits flüssigen Polyepoxiden weiter herabsetzen oder feste Polyepoxide in flüssige Mischungen überführen.

Als Säureanhydride können gebräuchliche Di- und Polycarbonsäureanhydride verwendet werden, Vorzugsweise verwendet man flüssige oder leicht schmelzende Dicarbonsäureanhydride, wie z.B. Hexahydrophthalsäureanhydrid, Methylhexahydrophthalsäureanhydrid, Methyl-endomethylentetrahydrophthalsäureanhydrid, Methyltetrahydrophthalsäureanhydrid, Tetrahydrophthalsäureanhydrid; von den beiden letzteren sind die Isomerengemische besonders geeignet.

Die Härtung kann durch Vermischen der 1,2-Polyepoxid-Carbonsäureanhydrid-Gemische mit bekannten Katalysatoren und gegebenenfalls weiteren Zusatzstoffen und Erhitzen auf höhere Temperaturen erfolgen.

Das Mischungsverhältnis wird zweckmäßigerweise so gewählt, daß auf eine 1,2-Epoxidgruppe etwa eine Anhydridgruppe entfällt; es kann auch mehr oder weniger Anhydrid (etwa 0,6 bis 1,2 Mol Anhydridgruppe pro Epoxidgruppe) verwendet werden. Es ist auch möglich, weitere Carbonsäureanhydride oder Härtungsmittel zusätzlich zu verwenden.

Die Härtung kann bei Temperaturen von etwa 60 °C bis 250 °C, vorzugsweise 80 °C bis 180 °C durchgeführt werden. Wichtig ist, daß die Härtung im flüssig-kristallinen (nematischen) Temperaturbereich der eingesetzten flüssig-kristallinen Polyepoxide durchgeführt wird. So wird z.B. ein Epoxidharz, das die Komponente (IV) enthält durch Aufschmelzen und Homogenisieren bei 120 bis 130 °C und anschließendes Abkühlen auf 90 °C im Temperaturbereich von 93 bis 80 °C gehärtet.

Die Ausbildung des flüssig-kristallinen Zustandes wird durch das Auftreten einer milchig/trüben Mischung sichtbar. Die ausgehärteten Epoxidharzformteile behalten diesen milchig/trüben undurchsichtigen Charakter überraschenderweise bei, auch wenn man nach der Härtungsreaktion eine Temperung selbst deutlich oberhalb des flüssig-kristallinen Bereichs, z.B. bei 150 °C, anschließt. Härtet man jedoch die flüssigen Epoxidharzmischungen, die die Verbindung (IV) enthalten, von Anfang an bei 110 bis 130 °C (also im isotropen Temperaturbereich), so erhält man klare, durchsichtige Formkörper. Dies macht deutlich, daß hierbei keine erfindungsgemäßen polymeren Netzwerke mit Übertrukturen erhalten wurden.

Die Härtung kann auch zu einem beliebigen Zeitpunkt durch Abkühlung auf z.B. Raumtemperatur unterbrochen und zu einem späteren Zeitpunkt fortgesetzt werden, Zweckmäßig wird der Zeitpunkt der Unterbrechung der Umsetzung so gewählt, daß die beim Abkühlen (z.B. auf Raumtemperatur) erhaltene Mischung im B-Zustand vorliegt, d.h. fest ist, und bei späterem Aufheizen auf die Temperatur der endgültigen Aushärtung wieder flüssig bzw. unter Druck verformbar wird, Die Anwendung dieses zuletzt genannten Verfahrens ist besonders dann vorteilhaft, wenn als Anwendungsgebiete Schichtpreßstoffe, Preßmassen und Beschichtungsmassen, z.B. nach dem Wirbelsinterverfahren, in Betracht kommen.

Man kann der 1,2-Polyepoxidharzmasse Füllstoffe wie Quarzmehl, Kreide, Aluminiumoxid, Pigmente wie Titandioxid, Eisenoxid, organische Pigmente wie Phthalocyaninpigmente, Flexibilisatoren wie Polyglykole, Polyetherglykol, Polyester mit endständigen Hydroxyl- und/oder Carboxylgruppen, Polysulfide, lösliche Farbstoffe, Verstärkungsmaterialien, wie z.B. Glasfasern, Gewebe oder Weichmacher, gegebenenfalls als Gemische, beifügen.

Die erfindungsgemäßen Massen können als Gießharzformstoffe, z.B. als Konstruktions- und Isolierstoffe, z.B. für Isolatoren, Transformatoren, Kondensatoren, gedruckte Schaltungen, Schichtpreßstoffe, Chemierohre und -behälter, Sportgeräte, für den Bootsbau, u.a. verwendet werden.

Je nach Einsatzgebiet werden Epoxidharz-Systeme aber auch mit polyfunktionellen Aminen gehärtet. Die chemische Struktur technisch gebräuchlicher Härter, die Chemismen der Härtungsreaktionen, die Eigenschaften der erhaltenen Formteile sowie die Anwendungsgebiete sind in Polymere Werkstoffe, herausgegeben von H. Batzer, Bd. III, Technologie 2, Georg Thieme Verlag, Stuttgart 1984, S. 170 ff.,

ausführlich beschrieben. Diese bekannten, in der Technik gebräuchlichen Härter können in Abmischung mit aromatischen Diaminen der Formel (I) und Polyepoxiden der Formel (IV) zu Epoxidharzformteilen, bestehend aus den erfindungsgemäßen polymeren Netzwerken mit Überstrukturen ausgehärtet werden, wenn man im nematischen LC-Bereich der Bausteine die Härtungsreaktion vornimmt.

Polyisocyanate und Polyepoxide können unter Anwendung geeigneter Katalysatoren zu polymeren Netzwerken mit Isocyanurat- und Oxazolidinonstrukturen polyaddiert werden. Wärmehärtbare Reaktionsgemische dieser Art und ein Verfahren zur Herstellung von Formkörpern unter Verwendung dieser Gemische sind z.B. in der (bisher noch nicht veröffentlichten) deutschen Patentanmeldung P-3 600 764.1 vom 14.01.1986 beschrieben.

Verwendet man als Ausgangskomponenten z.B. das LC-Diepoxid entsprechend der Formel (IV) und das LC-Diisocyanat der Formel (111) und härtet diese Mischung unter Anwendung beliebiger Katalysatoren des Standes der Technik in LC-Bereich der Ausgangskomponenten, so erhält man ebenfalls erfindungsgemäße polymere Netzwerke mit Überstrukturen. Auch hier zeigt sich der LC-Charakter der polymeren Netzwerke durch das milchig/trübe, undurchsichtige Aussehen der Formkörper.

UP-Harze sind Lösungen ungesättigter Polyester (A) in einem Vinylmonomeren (B), meist Styrol. Ihre Aushärtung erfolgt durch vernetzende Co-Polymerisation des Vinylmonomeren mit den polymerisierbaren Doppelbindungen des Polyesters. Monomere Grundstoffe, Polykondensation und Härtung sind ebenfalls in "Polymere Werkstoffe" (von H. Batzer, s.o., S. 123 ff.) beschrieben.

Ersetzt man das Styrol teilweise durch ungesättigte LC-Bausteine gemäß Formel (I) und führt die Härtungsreaktion im nematischen Bereich der LC-Bausteine durch, so erhält man durch Co-Polymerisation erfindungsgemäße polymere Netzwerke mit Überstrukturen.

Ebenfalls ist die Bildung polymerer Netzwerke mit Überstrukturn möglich dadurch, daß man Polykondensate hergestellt unter Benutzung von Verbindungen der Formeln (I) und/oder (IA), mit Styrol oder einem für ungesättigte Polyesterharze gebräuchlichen Monomeren (H. Batzer, s.o., S. 123 ff) vernetzt.

Als Ausgangsbausteine zur Herstellung von LC-UP-Harzen kommen z.B. folgende Verbindungen in Betracht: 4,4'-Dihydroxy-diphenyl-Derivate der Formel

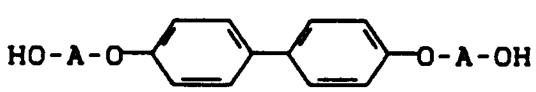

(A = geradkettiger oder verzweigter Alkylenrest mit 2 bis 12 C-Atomen) vorzugsweise geradkettiger Alkylenrest, z.B.

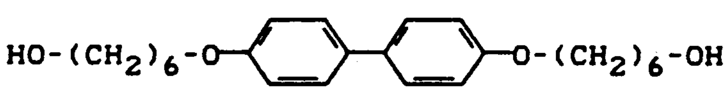

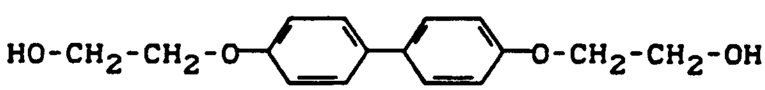

oder Diphenyl-Derivate wie

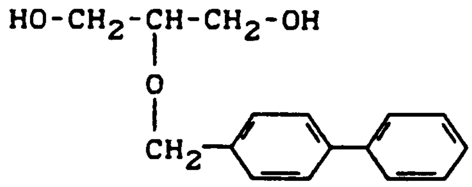

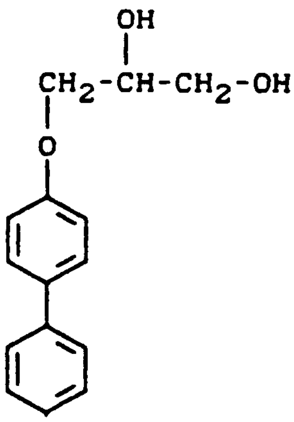

Zur Herstellung der polymeren Netzwerke mit Überstrukturen kommen auch Abmischungen der flüssigkristallinen UP-Harze mit konventionellen UP-Harzen infrage.

Bevorzugte $\alpha,\beta$-ungesättigte Polyester A) sind die üblichen Polykondensationsprodukte mindestens einer $\alpha,\beta$-ethylenisch ungesättigten Dicarbonsäure mit in der Regel 4 oder 5 C-Atomen oder deren esterbildenden Derivate, z.B. ihren Anhydriden, gegebenenfalls in Abmischung mit bis zu 200 Mol-%, bezogen auf die ungesättigten Säurekomponenten, mindestens einer aliphatischen Dicarbonsäure mit 4 bis 10 C-Atomen oder einer gesättigten oder ungesättigten cycloaliphatischen, araliphatischen oder aromatischen Dicarbonsäure mit 8 bis 10 C-Atomen oder deren esterbildenden Derivate mit mindestens einer Polyhydroxyverbindung, insbesondere Dihydroxyverbindung mit 2 bis 8 C-Atomen, also Polyester, wie sie bei J. Björksten et al., "Polyesters and ther Applications", Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure. Beispiele, für die gegebenenfalls zu verwendenden aliphatischen, gesättigten oder ungesättigten cyclo-aliphatischen, araliphatischen oder aromatischen Dicarbonsäuren oder für ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. Um schwerentflammbare Harze herzustellen, können z.B. Hexachlorendomethylen-tetrahydrophthalsäure, Tetrachlorphthalsäure oder Tetrabromphthalsäure verwendet werden. Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis-(4-hydroxycyclohexyl)-propan, 1,4-3,6-Dianhydrohexitole, Bis-oxalkyliertes Bisphenol A, Perhydrobis phenol und andere eingesetzt werden. Bevorzugt verwendet werden Ethylenglykol, Propandiol-1,2, Diethylenglykol und Dipropylenglykol.

Weitere Modifikationen sind möglich durch Einsatz ein-, drei- oder vierwertiger Alkohole mit 1 bis 6 C-Atomen, wie Methanol, Ethanol, Butanol, Allylalkohol, Benzylalkohol, Cyclohexanol und Tetrahydrofurfurylalkohol, Trimethylolpropan, Glycerin und Pentaerythrit, von Mono-, Di- und Triallylethern und Benzylethern drei- und mehrwertiger Alkohole mit 3 bis 6 C-Atomen gemäß DE-B 1 024 654, z.B. Trimethylolpropandiallylether, sowie durch Einbau einbasischer Säuren wie Benzoesäure oder Acrylsäure.

Die ungesättigten Polyester A können auch Umsetzungsprodukte von Polyesterpräkondensaten und Dienen, z.B. Dicyclopentadien, nach Diels-Alder sein. Solche Polyester sind z.B. bei I.R. Lawrence "Polyester Resins", Reinhold Publ. Corp. New York 1960, S. 18 f. und im Kunststoff-Handbuch Bd. VIII ("Polyester"), Carl Hanser Verlag, München 1973, S. 247-312 beschrieben. Die Säurezahlen der Polyester liegen gewöhnlich zwischen 10 und 100, vorzugsweise zwischen 20 und 70, die OH-Zahlen zwischen 10 und 150, vorzugsweise zwischen 20 und 100, und die als Zahlenmittel bestimmten Molekulargewichte $\overline{M}_n$

zwischen ca. 500 und 5.000, vorzugsweise zwischen ca. 1.000 und 3.000 (dampfdruckosmometrisch gemessen in Dioxan und Aceton; bei differierenden Werten wird der niedrigere als der korrekte Wert angesehen).

Als mit den ungesättigten Polyestern copolymerisierbare ungesättigte Monomere B eignen sich in der Polyestertechnologie gebräuchliche ungesättigte Verbindungen, die bevorzugt α-substituierte Vinyl- oder Vinylidengruppen oder β-substituierte Allylgruppen tragen, bevorzugt Styrol; aber auch beispielsweise kernchlorierte und -alkylierte bzw. alkenylierte Styrole, wobei die Alkylgruppen 1 bis 4 Kohlenstoffatome enthalten, können z.B. Vinyltoluol, Divinylbenzol, α-Methylstyrol, tert.-Butylstyrol, Chlorstyrole; Vinylester von Carbonsäuren mit 2 bis 6 Kohlenstoffatomen, bevorzugt Vinylacetat, Vinylpropionat, Vinylbenzoat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1 bis 4 Kohlenstoffatomen in der Alkoholkomponente, ihre Amide und Nitrile, Maleinsäureanhydrid, -halb- und -diester mit 1 bis 4 Kohlenstoffatomen in der Alkoholkomponente, -halb- und diamide oder cyclische Imide wie Butylacrylat, Methylmethacrylat, Acrylnitril, N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat.

Polymere Netzwerke mit Überstrukturen, die als Beschichtungsmittel Verwendung finden, können nach dem neuen Aufbauprinzip folgendermaßen erhalten werden:

Durch Veresterung von 1,5-Bis-(2-hydroxy-ethoxy)-naphthalin mit Adipinsäure im Molverhältnis 1,0:0,9 wird ein relativ niedermolekularer Polyester mit OH-Gruppen mit LC-Eigenschaften erhalten. Dieser Ester weist bei der Differential-Thermo-Analyse im Bereich von ca. 138 bis 141 °C einen ausgeprägten nematischen Phasenübergang auf bevor er bei ca. 153 °C in den Zustand der isotropen Schmelze übergeht.

Über die endständigen OH-Gruppen ist eine anschließende Vernetzung durch Polykondensation mit Aminoharzvernetzern bzw. durch Polyaddition mit polyfunktionellen Isocyanaten möglich. Wird die Vernetzung im nematischen Temperaturbereich durchgeführt, sind die Beschichtungen mit anisotropen Eigenschaften erhältlich.

Von der Vielzahl der für Lackpolymere brauchbaren Komponenten Bausteine vom Typ a) mit LC-Charakter sind im folgenden einige aufgeführt:

Diphenylderivate oder Hexahydrodiphenylderivate wie:

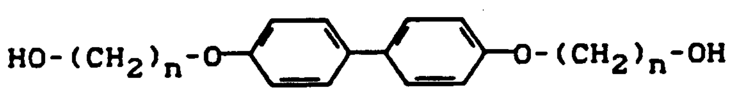

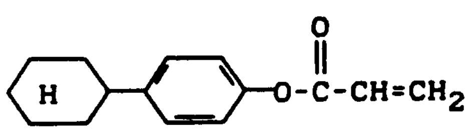

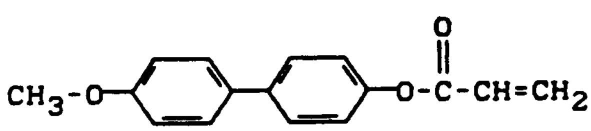

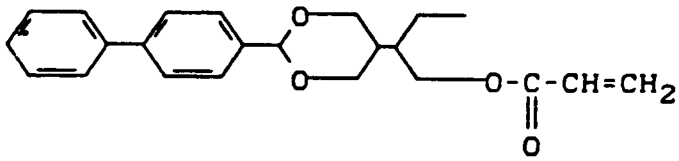

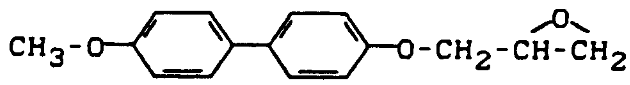

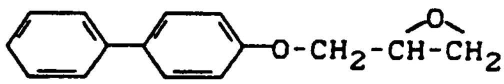

Prinzipiell sind im erfindungsgemäßen Verfahren, wie an obigen Beispielen aufgezeigt, solche Substanzen geeignet, die durch ihre funktionellen Gruppen die Möglichkeit zur Polykondensation, zur Polyaddition oder zur Polymerisation bieten. Die LC-Komponente kann dabei in die Haupt- oder Seitenkette eingebaut werden.

Polykondensationen, Polymerisationen und Polyadditionen zur Herstellung von Lackpolymeren sind allgemein bekannt und werden beispielsweise im Houben-Weyl, Band XIV/1, Makromolekulare Stoffe, Georg Thieme Verlag, Stuttgart, 1961, S. 6, fortführend beschrieben. Desweiteren findet sich eine Vielzahl von Beispielen zur Herstellung von Lackpolymeren im "Lehrbuch der Lacke und Beschichtungen", W. Kittel, Verlag W.A. Colomb, Stuttgart, sowie im Buch "Lackkunstharze" von Wagner und Sarx, Carl Haeser Verlag, München 1971.

Die als Vernetzer verwendeten Aminoharze sind Melamin-Formaldehyd- oder Harnstoff-Formaldehyd-Kondensationsprodukte. Melaminharze sind alle herkömmlichen nicht veretherten oder mit gesättigten Monoalkoholen mit 1 bis 4 C-Atomen veretherten Melamin-Formaldehyd-Kondensate, wie sie z.B. in der FR-A 943 411 oder bei D.H. Solomon, The Chemistry of Organic Filmformers, 235-240, John Wiley & Sons, Inc., New York, 1967, beschrieben sind. Die Melaminharze können jedoch auch ganz oder teilweise durch andere vernetzende Aminoplasten, wie sie z.B. in "Methoden der Organischen Chemie" (Houben-Weyl), Bd. 14/2, Teil 2, 4. Aufl., Georg Thieme Verlag, Stuttgart, 1963, 319 ff. beschrieben sind, ersetzt werden.

Sämtliche erfindungsgemäße polymere Netzwerke mit Überstrukturen zeichnen sich durch ihr opakes Aussehen, durch hohe Härte bei gleichzeitig vorhandener guter Elastizität und durch hohe Temperaturbeständigkeit aus.

Beispiele

Herstellung flüssig-kristalliner Bausteine a)
(Beispiele 1 bis 3)

Beispiel 1

(4-Hydroxy-phenyl)-4-hydroxy-benzoat (V)

| Ansatz | |
|---|---|
| 414 g | (3 Mol) 4-Hydroxy-benzoesäure |
| 330 g | (3 Mol) Hydrochinon |
| 1.800 ml | (ca. 1,56 kg) Xylol |
| 6 g | Borsäure |
| 4,5 ml | (ca. 8,2 g ) konz. Schwefelsäure |

In einem 3-l Sulfierbecherglas, das mit Planschliff-Deckel, Innenthermometer, $V_2A$-Stahlrührer und - über einen Wasserabscheider - einem Rückflußkühler versehen ist und sich in einem Ölbad (mit Tauchsieder und Kontaktthermometer) befindet, wird das Gemisch der Reaktionskomponenten unter intensivem Rühren auf Rückfluß-Temperatur erhitzt. Nach ca. 3,5-stündigem Rühren auf Rückfluß-Temperatur ist die

Auskreisung des durch die Umsetzung entstandenen Wassers (ca. 55 bis 56 ml; Th. 54 ml) beendet, Man rührt noch 0,5 Stunden bei Rückfluß-Temperatur nach und läßt dann - nach Möglichkeit unter weiterem Rühren - auf Raumtemperatur erkalten. Das anschließend scharf abgesaugte Rohprodukt wird mit Xylol gewaschen und bei Raumtemperatur unter vermindertem Druck getrocknet.

Das gepulverte Material wäscht man zuerst gründlich mit 3 %iger Natrium-hydrogencarbonat-Lösung, dann mit Wasser und trocknet es bei Raumtemperatur unter vermindertem Druck,

Ausbeute: 680 g (98,5 % der Theorie)
Fp.: 242 bis 245 °C

Zur weiteren Reinigung extrahiert man (V) aus dem Rohprodukt erschöpfend mit heißem Aceton, fällt (V) aus dem auf Raumtemperatur abgekühlten Extraktionsgemisch durch Zusatz von Eiswaser unter Rühren, saugt scharf ab und trocknet über Silikagel bei Raumtemperatur unter vermindertem Druck, Nach Umkristallisieren aus Glykolmomethyletheracetat erhält man in 87 %iger Ausbeute (600 g) reines (V) vom Fp.: 241 bis 243 °C.

Das neue Herstellungsverfahren dieser Substanz wird in einer gleichzeitig eingereichten deutschen Patentanmeldung P 3 622 611 beansprucht.

Beispiel 2

p-Epoxypropoxyphenyl-p-epoxypropoxybenzoat (IV)

| Ansatz | |
|---|---|
| 2.775 g | (30 Mol) Epichlorhydrin |
| 4 g | Tetraethylammoniumchlorid |
| 230 g | (1 Mol) 4-Hydroxyphenyl-4-hydroxybenzoat (V) |
| 222 g | (2,5 Mol) 45 %ige NaOH |

In einem 4 1 3-Hals-Kolben, der mit Innenthermometer, Rührer und - über einen Wasserabscheider - einem Rückflußkühler versehen ist, wird das Epichlorhydrin, das 4-Hydroxyphenyl-4-hydroxybenzoat (V) und das Tetraethylammoniumchlorid 16 Stunden bei 60 °C unter $N_2$ zur Reaktion gebracht. Die anschließende Dehydrohalogenierung erfolgt innerhalb von 6 Stunden bei 130 mbar und 60 °C durch kontinuierliches Zutropfen der wäßrigen NaOH. Das Wasser wird dabei kontinuierlich über den Wasserabscheider ausgekreist.

Nach erfolgter NaOH-Zugabe wir dnoch 3 Stunden bei den gleichen Bedingungen nachgerührt. Anschließend wird das Kochsalz abfiltriert, mit frischem Epichlorhydrin gewaschen und die vereinigten Filtrate bei 50 °C Badtemperatur und 18 mbar eingeengt. Das abdestillierte Epichlorhydrin wird für den nächsten Ansatz wiederverwendet. Der Rückstand wird in 200 ml Acetonitril gelöst und nach Zugabe von 1 l Methanol zur Kristallisation gebracht. Die Kristalle werden abgesaugt, mit Methanol gewaschen und bei Raumtemperatur unter Vakuum über Silikagel getrocknet.

Ausbeute: 242 g (71 % der Theorie) Fp.: 105 - 107 °C. Nach zweimaligem Umkristallisieren aus Acetonitril/ Isopropanol (1:1) steigt der Fp auf 118 °C an. (DTA)

Quantitative Differential-Thermoanalyse (DTA) und polarisationsmikroskopische Messungen zeigen, daß die Verbindung IV beim Abkühlen aus der Schmelze bei 93 °C in den nematischen Zustand und bei 80 °C in den festen Zustand übergeht.

DTA-Messung, Gerät Mettler TA 2000, Quantitative Meßzellen, Alu-Tiegel, Übersichtsmessung: 2 K/min.

Polarisationsmikroskopische Messung, Gerät Mettler FP 5, 60-fache Vergrößerung, gekreuzte Polarisationsfilter.

Diese neue Substanz und ihre Herstellung wird in einer gleichzeitig eingereichten deutschen Patentanmeldung P (Le 24 641) beansprucht.

Beispiel 3

p-Aminophenyl-p-aminobenzoat (APAB) wurde gemäß DE-B 1 085 869 hergestellt nur mit dem Unterschied, daß die Hydrierung des p-Nitrophenyl-p-nitrobenzoats (IX) nicht in Methanol sondern in Dimethylformamid durchgeführt wurde (Ausbeute >90 % der Theorie).

Die Phosgenierung von (APAB) zu 4-Isocyanatobenzoesäure-4'-isocyanatophenylester (III) erfolgte ebenfalls gemäß DE-B 1 085 869.

Verbindung (III) wurde mit den in Beispiel 2 beschriebenen Geräten auf flüssig-kristallinen Charakter hin untersucht.

DTA-Messung

(III) schmilzt beim Aufheizen bei 117,2 °C und zeigt einen Übergang fest → nematisch, bei 172,6 °C einen Übergang nematisch → isotrop flüssig.

Beim Abkühlen erfolgt bei 172 °C der Übergang isotrop flüssig → nematisch und bei 102 °C der Übergang nematisch → fest.

Polarisationsmikroskopische Messung

(III) schmilzt beim Aufheizen bei 117,5 °C und zeigt einen Übergang fest → nematisch, bei 172,1 °C einen Übergang nematisch → isotrop flüssig.

Beim Abkühlen erfolgt bei 172,5 °C der Übergang isotrop flüssig → nematisch und bei 101,1 °C der Übergang nematisch → fest.

Beispiel 4

Aufbau eines polymeren Netzwerks mit Überstrukturen durch Polyaddition nach dem Diisocyanat-Polyadditionsverfahren

320 g (0,1575 Mol) eines linearen Polypropylenglykols, Molekulargewicht 2.000

35 g (0,166 Mol) eines trifunktionellen Polyethers, Molekulargewicht 3.000 (aus Trimethylolpropan und Propylenoxid) und 30,5 g (0,125 Mol) eines Diaminkettenverlängerers folgender Formel

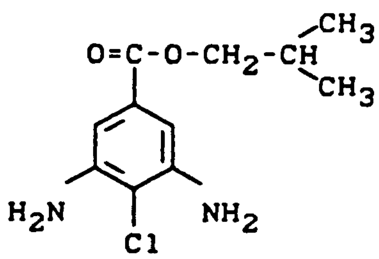

werden gemischt und bei 120 °C, 18 mbar, 1 Stunde entwässert (Komponente A).

98 g des LC-Diisocyanats (III) (4-Isocyanatobenzoesäure-4'-isocyanatophenylester) von Beispiel 3 werden bei 130 °C aufgeschmolzen. Es entsteht eine opake Schmelze. Die opake Schmelze wird dann unter Rühren und Stickstoff in das 120 °C vorgewärmte Gemisch (Komponente A) eingerührt (NCO-Kennzahl 117). Durch Anlegen eines Vakuums wird die Mischung entgast und direkt in eine vorgewärmte Form (120 °C) 18 x 19 x 0,4 cm eingegossen. Die Polyaddition und Vernetzungsreaktionen werden dann bei 120 °C im Heizschrank vervollständigt (24 Stunden).

Man erhält auf diese Weise eine opake Platte eines physikalisch und chemisch vernetzten Polyurethanpolyharnstoffs mit Übertrukturen.

Zum Vergleich wurde ein Polyurethanpolyharnstoff aus den gleichen Polyolen, dem gleichen Kettenverlängerer und 4,4'-Diphenylmethan-diisocyanat hergestellt. Es entsteht eine durchsichtige Platte eines Polyurethanpolyharnstoffs ohne Überstrukturen.

Das erfindungsgemäße Elastomer wurde im Vergleich zu dem Elastomer aus herkömmlichen Bausteinen nach DIN 53 504 und DIN 53 515 geprüft.

| Zugversuch nach DIN 53 504 | erfindungsgem. | Vergleich |
|---|---|---|
| Zugfestigkeit [MPa] -20° C | 39,3 | 28,4 |
| +22° C | 14,8 | 11,4 |
| +70° C | 5,51 | 2,31 |
| Reißdehnung [%] -20° C | 340 | 336 |
| +22° C | 460 | 412 |
| +70° C | 396,8 | 70 |
| Härte [Shore A/D] +22° C | 65/18 | 70/20 |
| Elastizität [%] +22° C | 33 | 29 |
| Druckverformungsrest nach DIN 53 515 [%] 70 h/+23° C | 6,8 | 20,0 |
| 24 h/+70° C | 26,6 | 36,1 |

Beispeil 5

Herstellung von Epoxidharzen durch Härtung von p-Epoxypropoxyphenyl-p-epoxybenzoat (IV) mit p-Aminophenyl-p-aminobenzoat (APAB)
Das Diamin (APAB) wird in den in der Tabelle angegebenen Mengenverhältnissen im Bisepoxid (IV) bei 135 bis 140 ° C gelöst und durch Tempern bei verschiedenen Temperaturen zum Vernetzen gebracht.

**Tabelle 1**

| Versuch Nr. | Bisepoxid (IV) [g] | Diamin (APAB) [g] | Tempern 1 Temp. [°C] | Tempern 1 Zeit [Std] | Tempern 2 Temp. [°C] | Tempern 2 Zeit [Std] | Eigenschaften |
|---|---|---|---|---|---|---|---|
| (1)$^{+}$ | 6,8 | 2,3 | 110 | 24 | - | - | durchsichtig |
| 2 | 6,8 | 2,3 | 90 | 24 | 120 | 24 | opak |
| 3 | 6,8 | 2,3 | 90 | 24 | 150 | 24 | opak |
| 4 | 6,8 | 2,3 | 90 | 24 | 150 | 24 | opak |
| 5 | 6,8 | 2,3 | 90 | 24 | 200 | 24 | opak |
| 6 | 20,4 | 6,9 | 90 | 24 | 120 | 24 | zähelastische, opake Platte |
| (7)$^{+}$ | 100,0 | 32,0 | 130 | 2,5 | 160 | 16 | transparent |
| 8 | 100,0 | 32,0 | 90 | 2,5 | 160 | 16 | opak |

( )$^{+}$ nicht erfindungsgemäß

Tabelle 1 macht deutlich, daß beim Härten des Epoxidharzes im isotropen Temperaturbereich (Versuche Nr. 1 und 7) durchsichtige Formkörper erhalten werden (Netzwerke ohne Überstrukturen), während bei der Härtung im nematischen Temperaturbereich (Versuche 2 bis 6 und 8) opake Formkörper erhalten werden (Netzwerke mit Überstrukturen). Die Versuche Nr. 2 bis 6 und 8 zeigen weiterhin, daß einmal entstandene Netzwerke mit Überstrukturen durch Nachtempern bei erhöhten Temperaturen nicht in Netzwerke ohne Überstrukturen umgewandelt werden.

Tabelle 2

| Eigenschaften der Epoxidharzformteile aus Versuch 7 und 8 | | |
|---|---|---|
| | Versuch 7 | Versuch 8 |
| Biegefestigkeit [MPa] | 91 | 112 |
| Randfaserdehnung [%] | 4,8 | 6,7 |
| Schlagzähigkeit [$kJ/m^2$ ] | 32 | 43 |
| Martensgrad [°C] | 174 | 174 |

Tabelle 2 macht deutlich, daß die mechanischen Eigenschaften der Epoxidharze mit Überstrukturen im Vergleich zu den im isotropen Temperaturbereich gehärteten Epoxidharzen im Mittel um ca. 30 % verbessert sind,

Beispiel 6

80 g 4-Isocyanatobenzoesäure-4-isocyanato-phenylester (III) (aus Beispiel 3) und
20 g p-Epoxypropoxyphenyl-p-epoxypropoxybenzoat (IV) (aus Beispiel 2) werden bei 135 bis 140°C gemischt, mit 1 g Salz aus Dimethylbenzylamin und Dibutylphosphorsäure als Katalysator versetzt, in eine Form gegossen und bei 90°C 24 Stunden gehärtet. Die Nachhärtung erfolgt bei 180°C 24 Stunden und anschließend weitere 24 Stunden bei 200°C. Man erhält auf diese Weise ein opakes, zähelastisches polymeres Isocyanurat/Oxazolidinon-Netzwerk mit Überstrukturen.

Beispiel 7

274 g 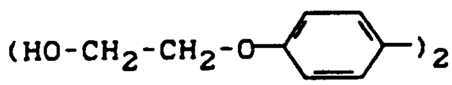

und 146 g Adipinsäure werden bei 155°C aufgeschmolzen und bei 200°C bis auf eine Säurezahl von 75 mg KOH/g kondensiert. Nach Zugabe von 51,6 g Maleinsäureanhydrid bei 120°C wird noch 2 Stunden bei dieser Temperatur gehalten. Das feste UP-Harz wird im Polarisationsmikroskop untersucht. Man stellt folgende Übergänge fest:
fest → nematisch 80°C
nematisch → isotrop 137°C

Beispiel 8

500 g 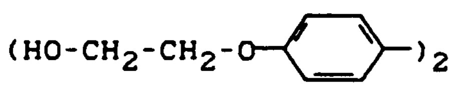

und 137,5 g Fumarsäure werden in 1 Stunde auf 210°C geheizt und gehalten bis sich kein $H_2O$ mehr abspaltet. Stabilisierung erfolgt mit 0,018 g Hydrochinon-Paste. Man erhält ein UP-Harz von marmorartiger Konsistenz, das polarisationsmikroskopisch und mittels Differential Scanning Calorimetrie (DSC) untersucht wird.

Polarisationsmikroskop:

Übergang nematisch → isotrop flüssig 191,5°C

Differential Scanning Calorimetrie:

1. Umwandlung 143,9°C
2. Umwandlung 172°C

nematisch → isotrop 190,5°C

Die ungesättigten Polyester aus Beispiel 7 und 8 mit Überstrukturen können, wie im allgemeinen Teil beschrieben, mit ungesättigten Monomeren radikalisch zu polymeren Netzwerken mit Überstrukturen vernetzt werden, wenn man die Polymerisation im nematischen Bereich der ungesättigten Polyesterharze vornimmt.

## Patentansprüche

1. Verfahren zur Herstellung von polymeren Netzwerken mit Überstrukturen, dadurch gekennzeichnet, daß man nach Verfahren der Polymerisation, Polyaddition oder Polykondensation
   a) funktionelle, vorzugsweise mehrfunktionelle, Bausteine mit flüssig-kristallinem Charakter, gegebenenfalls mit
   b) funktionellen, vorzugsweise mehrfunktionellen, Bausteinen mit oder ohne flüssig-kristallinem Charakter
   
   innerhalb des flüssig-kristallinen, bevorzugt nematischen Temperaturbereichs der zum Aufbau der Netzwerke verwendeten (mehr)funktionellen Bausteine mit flüssig-kristallinem Charakter unter Aufbau zum Polymeren umsetzt und gegebenenfalls bei Temperaturen außerhalb des flüssig-kristallinen Bereichs nachhärtet.

2. Verfahren zur Herstellung von polymeren Netzwerken mit Überstrukturen nach Anspruch 1, dadurch gekennzeichnet, daß als funktionelle, vorzugsweise (mehr)funktionelle Bausteine a) mit flüssigkristalliner Charakteristik Verbindungen der allgemeinen Formel (I)

   $R_1$-$(A_1)_m$-$Z_1$-$A_2$-$Z_2$-$(A_3)_n$-$R_2$ (I)

   wobei
   
   $R_1$, $R_2$

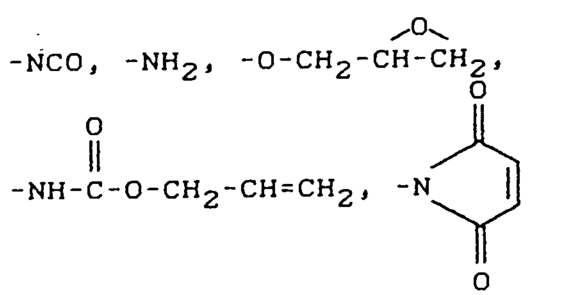

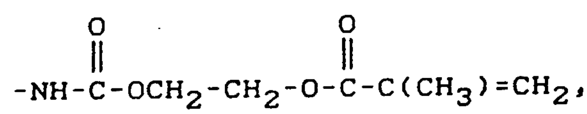

| | |
|---|---|
| | -L-$(CH_2)_x$OH, -L-$(CH_2)_x$-$CO_2$H,<br>L = O,<br>x ≧1 |
| $A_1$, $A_2$, $A_3$ | 1,4-Phenylen-, 4,4'-Diphenyl-, 4,4'-1,2,3,4,5,6-Hexahydrodiphenyl-, 1,4-Cyclohexylen-, 1,3-Dioxan-2,5-diyl-, Piperazin-1,4-diyl-, 2,7- oder 2,6-Naphthylen-Gruppen, wobei $A_1$ bis $A_3$ durch niedere Alkylreste, vorzugsweise Methyl substituiert sein können; |
| $Z_1$, $Z_2$ | -CO-O-, -O-CO-, -HC = CH-, -N = N-, -CH = N-, -$CH_2CH_2$-, -$OCH_2$-, -$CH_2O$-, -O-CO-O-, -$CH_2$-O-CO-, -CO-O-$CH_2$-oder eine direkte Bindung, wobei eine der Gruppen $Z_1$, $Z_2$ entfallen kann. |
| n | 0 oder 1<br>und |
| m | 1 oder 2 bezeichnen, wobei für den Fall, daß m = Z ist die beiden Gruppen $A_1$ gleich oder verschieden sein können, |

   gegebenenfalls mit Verbindungen der allgemeinen Formel (IA)

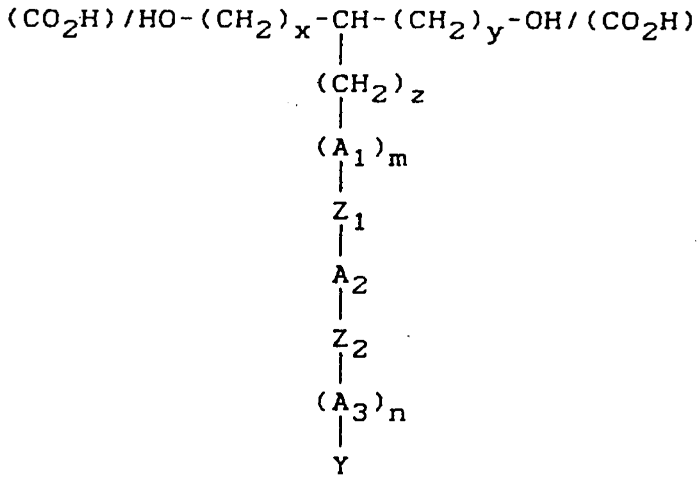

.(IA)

wobei
x, y, z ≧1,
und wobei
$A_1$, $A_2$, $A_3$, $Z_1$, $Z_2$, m und n die oben angegebenen Bedeutungen entspricht und Y = H oder $R_1$ bedeutet,
oder ihren oligomeren oder niedermolekularen, linearen Umsetzungsprodukten mit funktionellen Gruppen, eingesetzt werden.

**3.** Verfahren nach Ansprüchen 1 und 2, dadurch gekennzeichnet, daß man als funktionelle, vorzugsweise mehrfunktionelle Bausteine a) mit flüssig-kristallinem Charakter Polyisocyanate der allgemeinen Formel (II)

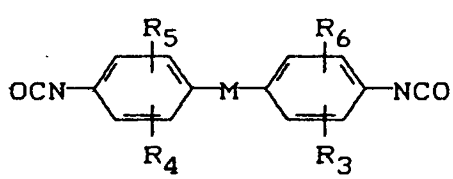

(II)

wobei

| | |
|---|---|
| M | -HC = CH-, -N = N-, -CH = N-, -COO-, $-CH_2-CH_2-$<br>und |
| $R_3$ bis $R_6$ | Wasserstoff oder gesättigte aliphatische, gegebenenfalls durch Ethersauerstoffatome unterbrochene Substituenten mit 1 bis 12 C-Atomen, niedere Alkylgruppen, vorzugsweise Methylgruppen in symmetrischer Substitution, oder F, Cl, Br, -CN, $-CF_3$ bedeutet, ganz besonders das flüssigkristalline Diisocyanat (III), |

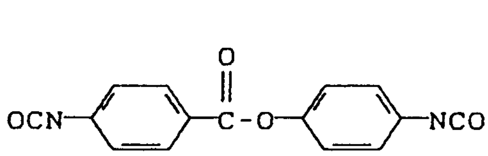

(III)

und/oder Polyepoxide der Formel (IIa) mit einer oder mehreren 1,2-Epoxidgruppen pro Molekül

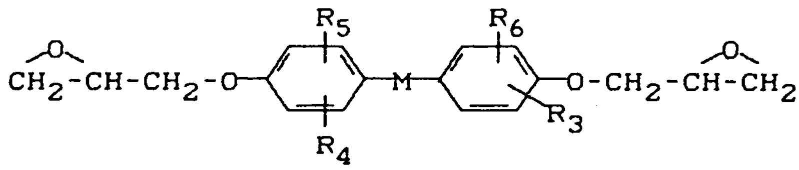 (IIa)

wobei M und $R_3$ bis $R_6$ die oben angeführte Beutung haben, insbesondere das Bisepoxid (IV)

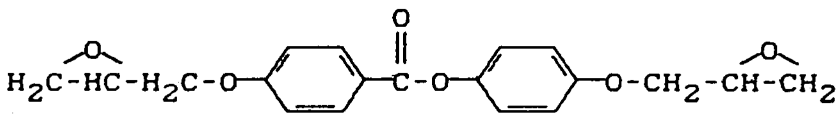 (IV)

und die Monoepoxide

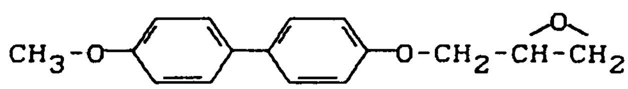

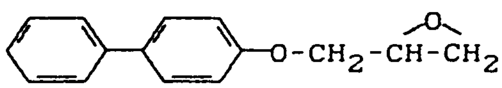

sowie 4,4-Dihydroxy-diphenylderivate der allgemeinen Formel

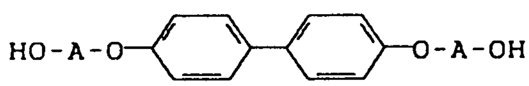 ,

(A = geradkettiger oder verzweigter Alkylenrest mit 2 bis 12 C-Atomen), vorzugsweise geradkettiger Alkylenreste, vorzugsweise

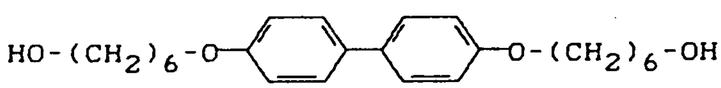

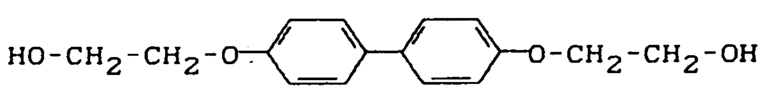

oder Diphenyl- und/oder Hexahydrodiphenylderivate der Formeln

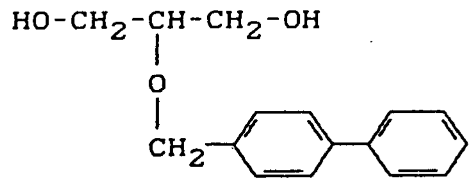

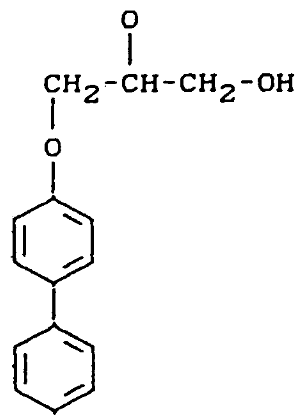

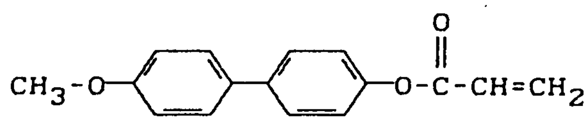

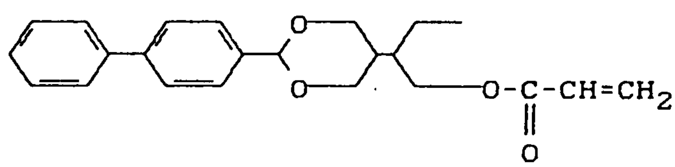

oder

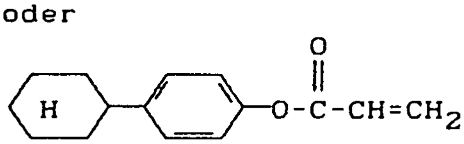

einsetzt.

**4.** Polymere Netzwerke mit Überstrukturen, erhältlich durch Polyaddition oder Polymerisation oder Polykondensation von

a) funktionellen, vorzugsweise mehrfunktionellen, Bausteinen mit flüssig-kristallinem Charakter, gegebenenfalls mit

b) funktionellen, vorzugsweise mehrfunktionellen, Bausteinen mit oder ohne flüssigkristallinem Charakter

innerhalb des flüssig-kristallinen, bevorzugt im nematischen Temperaturbereich der zum Aufbau der Netzwerke verwendeten (mehr)funktionellen Bausteine mit flüssig-kristallinem Charakter unter Aufbau zu Polymeren und gegebenenfalls Temperung außerhalb des flüssig-kristallinen Bereiches.

**5.** Polymere Netzwerke mit Überstrukturen nach Anspruch 4, dadurch gekennzeichnet, daß es es sich um Polyadditionskunststoffe nach dem Diisocyanat-Polyadditionsverfahren handelt.

**6.** Polymere Netzwerke mit Überstrukturen nach Anspruch 4, dadurch gekennzeichnet, daß es es sich um Polyadditionskunststoffe vom Epoxidharztyp handelt.

7. Polymere Netzwerke mit Überstrukturen nach Anspruch 4, dadurch gekennzeichnet, daß es es sich um Polymerisationskunststoffe vom Typ der ungesättigten Polyesterharze handelt.

8. Polymere Kunststoffe mit Überstrukturen nach Anspruch 4, dadurch gekennzeichnet, daß es es sich um Polykondensationskunststoffe vom Typ der Melamin- oder Phenolharze handelt.

9. Verwendung der durch Polymerisations-, Polyadditions- oder Polykondensationsreaktionen erhaltenen Polymeren mit Überstrukturen nach Ansprüchen 1 bis 8 als polymere Werkstoffe mit verbesserten Eigenschaften oder als Beschichtungs- und Überzugsmittel.

## Claims

1. A process for the production of polymeric networks with overstructures, characterized in that
   a) functional, preferably polyfunctional, units of liquid-crystalline character,
   optionally with
   b) functional, preferably polyfunctional units with or without liquid-crystalline character
   are reacted by polymerization, polyaddition or polycondensation at a temperature in the liquid-crystalline, preferably kinematic temperature range of the liquid-crystalline units used to form the networks with synthesis of the polymer, after which the polymer is optionally post-cured at temperatures outside the liquid-crystalline range.

2. A process as claimed in claim 1 for the production of polymeric networks with overstructures, characterized in that the functional, preferably (poly)functional, units a) of liquid-crystalline character used are compounds corresponding to general formula (I)

$R_1\text{-}(A_1)_m\text{-}Z_1\text{-}A_2\text{-}Z_2\text{-}(A_3)_n\text{-}R_2$ (I)

in which
$R_1$, $R_2$ =

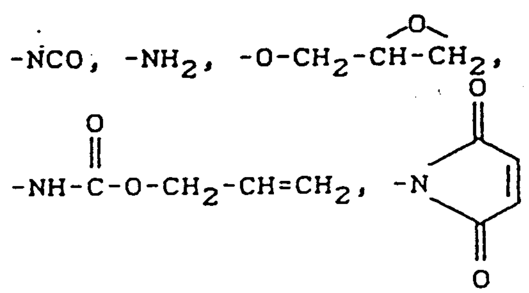

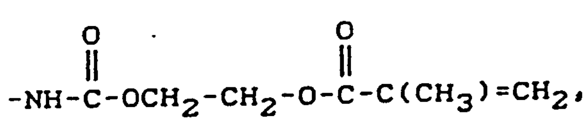

-L-$(CH_2)_x$OH, -L-$(CH_2)_x$-$CO_2$H,
L = O,
x ≥1

$A_1$, $A_2$, $A_3$ = 1,4-phenylene, 4,4'-diphenyl, 4,4'-1,2,3,4,5,6-hexahydrodiphenyl, 1,4-cyclohexylene, 1,3-dioxane-2,5-diyl, piperazine-1,4-diyl, 2,7- or 2,6-naphthylene groups; $A_1$ to $A_3$ may be substituted by lower alkyl radicals, preferably methyl;

$Z_1$, $Z_2$ = -CO-O-, -O-CO-, -HC = CH-, -N = N-, -CH = N-, -$CH_2CH_2$-, -$OCH_2$-, -$CH_2O$-, -O-CO-O-, -$CH_2$-O-CO-, -CO-O-$CH_2$- or a direct bond, in which case one of the groups $Z_1$, $Z_2$ may drop out,

n = 0 or 1

and

m = 1 or 2; where m = 2, the two groups $A_1$ may be the same or different,

optionally with compounds corresponding to general formula (1A)

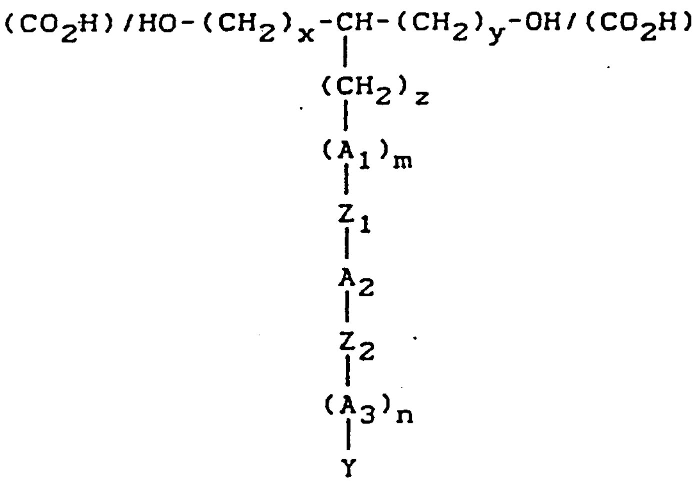

.(IA)

where

x, y, z ≧ 1 and

$A_1$, $A_2$, $A_3$, $Z_1$, $Z_2$, m and n are as defined above and Y = H or has the same meaning as $R_1$, or oligomeric or low molecular weight linear reaction products thereof containing functional groups.

**3.** A process as claimed in claims 1 and 2, characterized in that the functional, preferably polyfunctional, liquid-crystalline units a) used are polyisocyanates corresponding to general formula (II)

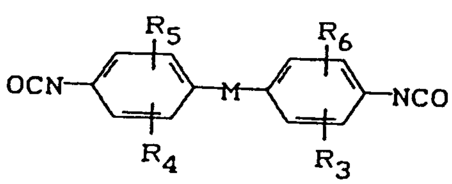

(II)

in which

M is -HC=CH-, -N=H-, -CH=N-, -COO-, $-CH_2-CH_2-$ and

$R_3$ to $R_6$ represent hydrogen or saturated aliphatic $C_{1-12}$ substituents optionally interrupted by ether oxygen atoms, lower alkyl groups, preferably methyl groups, in symmetrical substitution or F, Cl, Br, -CN, $-CF_3$,

more particularly the liquid-crystalline diisocyanate (III)

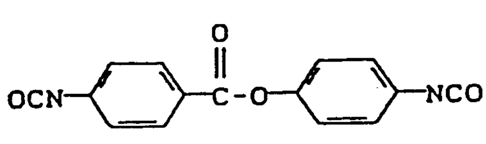

(III)

and/or polyepoxides corresponding to formula (IIa) containing one or more 1,2-epoxide groups per molecule

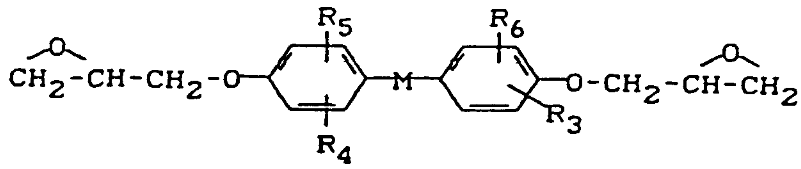 (IIa)

where M and $R_3$ to $R_6$ are as defined above, more particularly the bisepoxide (IV)

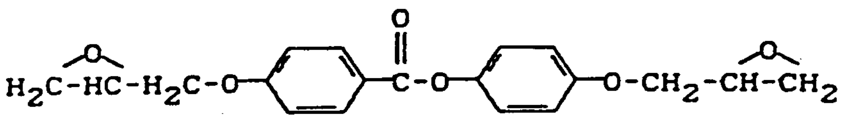 (IV)

and the monoepoxides

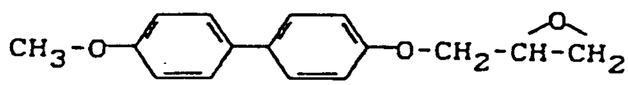

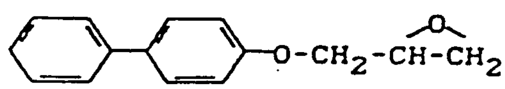

and 4,4-dihydroxy diphenyl derivatives corresponding to the general formula

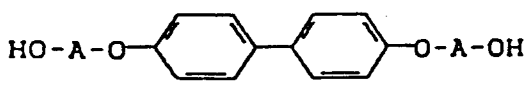 ,

(A = linear or branched $C_{2-12}$ alkylene radical), preferably linear alkylene radicals, preferably

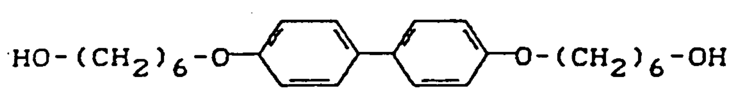

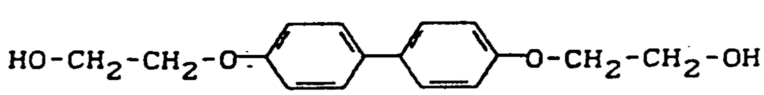

or diphenyl and/or hexahydrodiphenyl derivatives corresponding to the following formulae

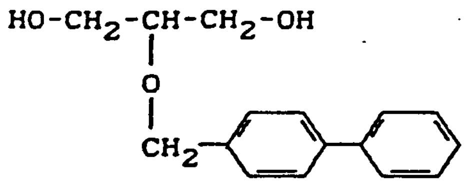

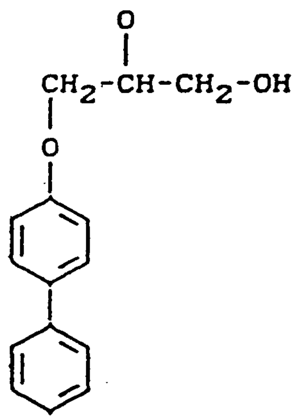

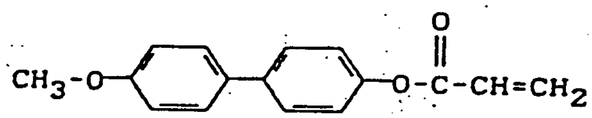

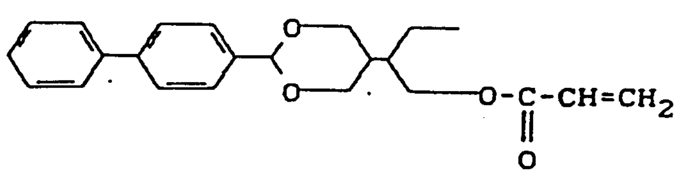

or

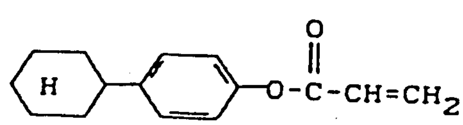

4. Polymeric networks with overstructures obtainable by polymerization, polyaddition or polycondensation of
   a) functional, preferably polyfunctional, units of liquid-crystalline character,
   optionally with
   b) functional, preferably polyfunctional units with or without liquid-crystalline character
   at a temperature in the liquid-crystalline temperature range and preferably in the kinematic temperature range of the (poly)functional liquid-crystalline units used to form the networks with synthesis of the polymer and, optionally, heating at temperatures outside the liquid-crystalline range.

5. Polymeric networks with overstructures as claimed in claim 4, characterized in that they are polyaddition plastics obtained by the diisocyanate polyaddition process.

6. Polymeric networks with overstructures as claimed in claim 4, characterized in that they are polyaddition plastics of the epoxy resin type.

7. Polymeric networks with overstructures as claimed in claim 4, characterized in that they are polymerization plastics of the unsaturated polyester resin type.

8. Polymeric plastics with overstructures as claimed in claim 4, characterized in that they are polycondensation plastics of the melamine or phenolic resin type.

9. The use of the polymers with overstructures obtained by polymerization, polyaddition or polycondensation reactions claimed in claims 1 to 8 as polymeric materials having improved properties or as coating compounds.

**Revendications**

1. Procédé de préparation de réseaux polymères à superstructures, caractérisé en ce que l'on fait réagir par les modes opératoires de polymérisation, de polyaddition ou de polycondensation

   a) des éléments de structure fonctionnels, de préférence polyfonctionnels, à caractère de cristaux liquides,

   le cas échéant avec

   b) des éléments de structure fonctionnels, de préférence polyfonctionnels, à caractère de cristaux liquides ou non,

   à l'intérieur de l'intervalle de température à cristaux liquides, de préférence de l'intervalle de température nématique, des éléments de structure (poly)fonctionnels à caractère de cristaux liquides utilisés pour la synthèse des réseaux, avec formation de polymères qu'on soumet le cas échéant à un durcissement complémentaire à des températures hors de l'intervalle à cristaux liquides.

2. Procédé de préparation de réseaux polymères à superstructures selon revendication 1, caractérisé en ce que l'on utilise en tant qu'éléments de structure fonctionnels, de préférence (poly)fonctionnels, à caractère de cristaux liquides, des composés de formule générale I

   $R_1\text{-}(A_1)_m\text{-}Z_1\text{-}A_2\text{-}Z_2\text{-}(A_3)_n\text{-}R_2$ (I)

   dans laquelle

   $R_1$, $R_2$ représentent

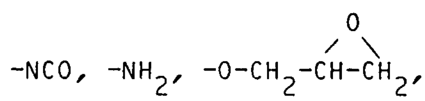

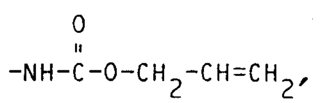

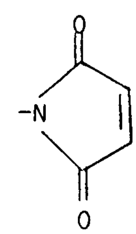

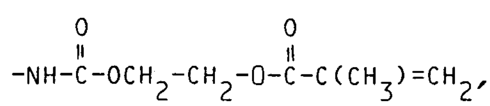

   $-L-(CH_2)_xOH$, $-L-(CH_2)_x-CO_2H$,
   L = O,
   $x \geq 1$

   $A_1$, $A_2$, $A_3$ représentent des groupes 1,4-phénylène, 4,4-diphényle, 4,4'--(1,2,3,4,5,6--hexahydro)-diphényle, 1,4--cyclohexylène, 1,3-dioxanne-2,5-diyle, pipérazine-1,4-diyle, 2,7- ou 2,6-naphtylène, les groupes $A_1$ à $A_3$ pouvant être substitués par des groupes alkyle inférieurs, de préférence des groupes méthyle ;

   $Z_1$, $Z_2$ représentent -CO-O-, -O-CO-, -HC=CH-, -N=N-, -CH=N-, $-CH_2CH_2-$, $-OCH_2$, $-CH_2O-$, -O-CO-O-, $-CH_2-O-CO-$, $-CO-O-CH_2-$, une liaison directe, l'un des groupes $Z_1$, $Z_2$ pouvant être supprimé.

n est égal à 0 ou 1, et

m est égal à 1 ou 2, et dans le cas où m = 2, les deux groupes $A_1$ peuvent être identiques ou différents,

le cas échéant avec des composés de formule générale IA

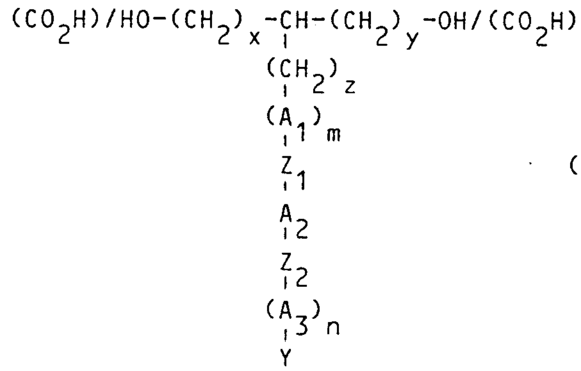

(IA)

dans laquelle
x, y, z ≧ 1,
$A_1$, $A_2$, $A_3$, $Z_1$, $Z_2$, m et n ont les significations indiquées ci-dessus et Y = H ou $R_1$.
ou leurs produits de réaction linéaires, oligomères ou à bas poids moléculaire, portant des groupes fonctionnels.

**3.** Procédé selon revendications 1 et 2, caractérisé en ce que l'on utilise en tant qu'éléments de structure fonctionnels, de préférence poly(fonctionnels) à caractère de cristaux liquides des polyisocyanates de formule générale II

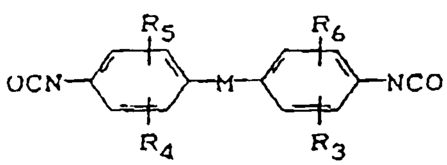

(II)

dans laquelle
M représente -HC=CH-, -N=N-, -CH=N-, -COO-, $-CH_2-CH_2-$ et
$R_3$ à $R_6$ représentent l'hydrogène ou des substituants aliphatiques saturés en $C_1$-$C_{12}$ éventuellement interrompus par des atomes d'oxygène d'éther, des groupes alkyle inférieurs, de préférence des groupes méthyle en substitution symétrique, ou F, Cl, Br, CN, $CF_3$, tout spécialement le diisocyanate à cristaux liquides III

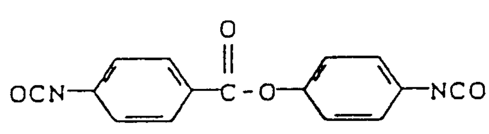

(III)

et/ou des polyépoxydes de formule IIa contenant un ou plusieurs groupes 1,2-époxyde par molécule

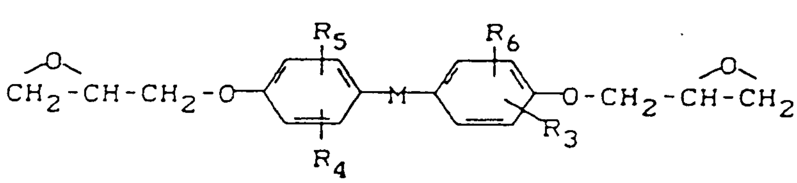

(IIa)

dans laquelle M et $R_3$ à $R_6$ ont les significations indiquées ci-dessus, en particulier le bis-époxyde IV

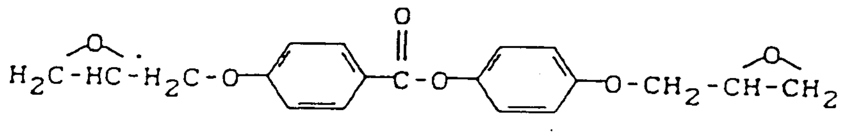

(IV)

et les monoépoxydes

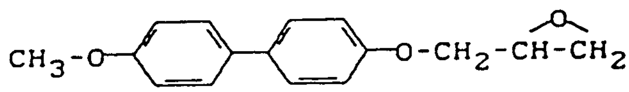

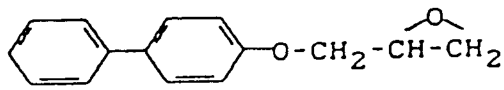

ainsi que des dérivés du 4,4-dihydroxydiphényle de formule générale

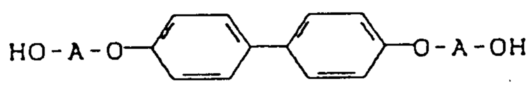

,

dans laquelle A représente un groupe alkylène à chaîne droite ou ramifiée en $C_2$-$C_{12}$, de préférence un groupe alkylène à chaîne droite, plus spécialement

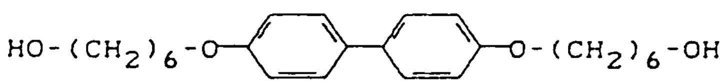

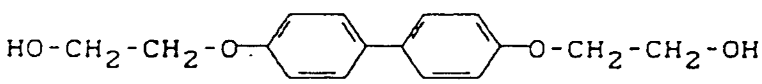

ou des dérivés du diphényle et/ou de l'hexahydrodiphényle de formules

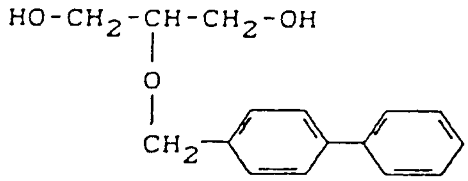

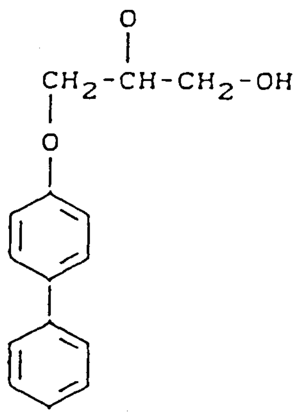

**4.** Réseaux polymères à superstructures obtenus par polyaddition ou polymérisation ou polycondensation de

a) des éléments de structure fonctionnels, de préférence polyfonctionnels, à caractère de cristaux liquides,

le cas échéant avec

b) des éléments de structure fonctionnels, de préférence polyfonctionnels, à caractère de cristaux liquides ou non

à l'intérieur de l'intervalle de température à cristaux liquides, de préférence dans l'intervalle de température nématique, des éléments de structure (poly)fonctionnels à caractère de cristaux liquides utilisés pour la synthèse des réseaux, avec formation de polymères qu'on soumet le cas échéant à un recuit hors de l'intervalle à cristaux liquides.

**5.** Réseaux polymères à superstructures selon revendication 4, caractérisés en ce qu'ils consistent en résines synthètiques de polyaddition formées par le procédé de polyaddition des diisocyanates.

**6.** Réseaux polymères à superstructures selon revendication 4, caractérisés en ce qu'ils consistent en résines synthétiques de polyaddition du type résine époxydique.

**7.** Réseaux polymères à superstructures selon revendication 4, caractérisés en ce qu'ils consistent en résines synthétiques de polymérisation du type des résines de polyesters insaturés.

**8.** Résines synthétiques polymères à superstructures selon revendication 4, caractérisés en ce qu'elles consistent en résines synthétiques de polycondensation du type des résines de mélamine ou des résines phénoliques.

**9.** Utilisation des polymères à superstructures selon revendications 1 à 8, obtenus par des réactions de polymérisation, de polyaddition ou de polycondensation, en tant que matériaux polymères à propriétés améliorées ou en tant que produits d'enduction et de revêtement.